# EUROPEAN PATENT APPLICATION

(11) **EP 4 654 296 A1**
(43) Date of publication of application: **26.11.2025**
(21) Application number: 24861518.9
(22) Date of filing: 28.04.2024
(51) Int. Cl.: H01M 4/36, H01M 4/62, H01M 10/0525

(54) **SILICON COMPOSITE MATERIAL AND PREPARATION METHOD THEREFOR, NEGATIVE ELECTRODE SHEET, SECONDARY BATTERY, AND ELECTRIC DEVICE**

(30) Priority: 04.09.2023 CN 202311129434
(71) Applicant: Contemporary Amperex Technology Co., Limited, Ningde, Fujian 352100 (CN)
(72) Inventor: WU, Kai, Ningde, Fujian 352100 (CN); SHI, Dongyang, Ningde, Fujian 352100 (CN); CHEN, Ning, Ningde, Fujian 352100 (CN); LIU, Zhi, Ningde, Fujian 352100 (CN); WANG, Yuzhen, Ningde, Fujian 352100 (CN); LV, Ruijing, Ningde, Fujian 352100 (CN)
(74) Representative: Lorenz Seidler Gossel Part. mbB
(86) International application number: PCT/CN2024/090430
(87) International publication number: WO 2025/050668

(57) **Abstract**

A silicon composite material and a preparation method therefor, a negative electrode sheet, a secondary battery, and an electrical apparatus. The silicon composite material comprises a one-dimensional conductive material, an inner core, and a coating layer, the outer surface of the inner core is coated with the coating layer, the one-dimensional conductive material is arranged on the outer surface of the coating layer, and the inner core comprises a silicon-based material. The silicon composite material has good cycle performance and fast charging performance.

## Description

### RELATED APPLICATION

The present application claims priority to Chinese Patent Application No. 2023111294347 filed on 04 September 2023 and titled "SILICON COMPOSITE MATERIAL, PREPARATION METHOD THEREFOR, NEGATIVE ELECTRODE PLATE, SECONDARY BATTERY, AND ELECTRICAL APPARATUS," the full text of which is incorporated herein by reference.

### TECHNICAL FIELD

The present application relates to the technical field of battery materials, and particularly relates to a silicon composite material, a preparation method therefor, a negative electrode plate, a secondary battery, and an electrical apparatus.

### BACKGROUND

The description here merely provides background information related to the present application, and does not necessarily constitute the prior art.

In recent years, as lithium-ion batteries are increasingly widely applied in energy storage power systems, such as water, fire, wind, and solar power stations, as well as many fields, such as electric tools, electric bicycles, electric motorcycles, electric vehicles, military equipment, and aerospace. Due to great development of the lithium-ion batteries, higher requirements are presented for, e.g., energy density and cycling performance thereof.

Silicon-based materials have attracted attention due to much higher capacity than carbon-based materials, as higher capacity means that higher energy density can be achieved. However, the cycling performance and fast charging performance of batteries comprising the silicon-based materials remain to be further improved.

### SUMMARY OF THE INVENTION

The present application provides a silicon composite material with good cycling performance and fast charging performance and a preparation method therefor, as well as a negative electrode plate using the silicon composite material, a secondary battery, and an electrical apparatus.

A first aspect of the present application provides a silicon composite material, comprising a one-dimensional conductive material, an inner core, and a cladding layer, wherein the cladding layer clads on an outer surface of the inner core, the one-dimensional conductive material is arranged on an outer surface of the cladding layer, and the inner core comprises a silicon-based material.

In the above silicon composite material, the one-dimensional conductive material is arranged on the outer surface of the cladding layer of the silicon-based material, thereby comprehensively improving the cycling performance and the fast charging performance.

In some of the embodiments, the one-dimensional conductive material extends outward from the outer surface of the cladding layer.

In some of the embodiments, the outer surface of the cladding layer further has catalyst particles, the one-dimensional conductive material is arranged on surfaces of the catalyst particles;
optionally, the catalyst particles comprise transition metal nanoparticles;
further optionally, the transition metal nanoparticles comprise one or more of iron nanoparticles, cobalt nanoparticles, and nickel nanoparticles;
optionally, the cladding layer comprises a carbon cladding layer; and
further optionally, the carbon cladding layer comprises amorphous carbon.

In some of the embodiments, mass percentage of the catalyst particles is 0.001%-0.3% based on mass of the silicon-based material.

In some of the embodiments, the one-dimensional conductive material comprises a carbon nanotube;
optionally, the carbon nanotube has one or more of features below:
(1) average tube length is 0.5 µm-10 µm; optionally, the average tube length of the carbon nanotube is 1 µm-10 µm; and
(2) the average tube diameter is 1 nm-50 nm; and optionally, the average tube diameter of the carbon nanotube is 20 nm-30 nm.

In some of the embodiments, mass percentage of the one-dimensional conductive material is 0.01%-5% based on the mass of the silicon-based material; and optionally, the mass percentage of the one-dimensional conductive material is 0.4%-5%.

In some of the embodiments, Dv50 of the silicon composite material is 1 µm-30 µm.

In some of the embodiments, the silicon-based material comprises one or more of a silicon-oxygen compound, a silicon-carbon composite, elementary silicon, or a silicon alloy.

A second aspect of the present application provides a method for preparing a silicon composite material, comprising steps below:
preparing a cladding layer on an outer surface of an inner core, wherein the inner core comprises a silicon-based material; and
preparing a one-dimensional conductive material on an outer surface of the cladding layer.

The above preparation method has simple steps, and is convenient for industrial promotion and application. Further, this preparation method prepares the one-dimensional conductive material on the outer surface of the cladding layer, thereby reducing the problems of slurry gelation and agglomeration caused by adding the one-dimensional conductive material to the slurry, and contributing to the process of the negative electrode plate.

In some of the embodiments, the preparing the one-dimensional conductive material on the outer surface of the cladding layer comprises steps below:
preparing catalyst particles on the outer surface of the cladding layer; and
preparing the one-dimensional conductive material on surfaces of the catalyst particles;
optionally, the catalyst particles comprise transition metal nanoparticles; and
further optionally, the transition metal nanoparticles comprise one or more of iron nanoparticles, cobalt nanoparticles, and nickel nanoparticles.

In some of the embodiments, the preparing the catalyst particles on the outer surface of the cladding layer comprises steps below:
preparing a transition metal oxide and/or a transition metal hydroxide on the surface of the cladding layer; and
generating transition metal nanoparticles from the transition metal oxide and/or the transition metal hydroxide through calcination under a reducing atmosphere;
optionally, the calcination being at a temperature of 600°C-800°C.

In some of the embodiments, the one-dimensional conductive material in-situ grows on the surfaces of the catalyst particles.

In some of the embodiments, the one-dimensional conductive material comprises a carbon nanotube, and the preparing the one-dimensional conductive material on the surfaces of the catalyst particles comprises a step below:
introducing a carbon source gas for in-situ growth of the carbon nanotube on the surfaces of the catalyst particles;
optionally, the carbon source gas comprising a hydrocarbon gas; and still further optionally, the carbon source gas comprising one or more of CH₄, C₂H₂, and propylene.

A third aspect of the present application provides a negative electrode plate, comprising a negative electrode current collector and a negative electrode active material layer arranged on at least one surface of the negative electrode current collector, wherein the negative electrode active material layer comprises one or more of the silicon composite material according to the first aspect or the silicon composite material prepared using the preparation method according to the second aspect.

In some of the embodiments, the negative electrode active material layer further comprises a carbon-based material; and
optionally, mass ratio of the silicon composite material to the carbon-based material is (10%-90%):(90%-10%).

A fourth aspect of the present application provides a secondary battery, comprising the negative electrode plate according to the third aspect.

A fifth aspect of the present application provides an electrical apparatus, comprising one or more of the negative electrode plate according to the third aspect or the secondary battery according to the fourth aspect.

Details of one or more embodiments of the present application are presented in the drawings and description below. Other features, objectives, and advantages of the present application will become apparent from the specification, drawings, and claims.

### DESCRIPTION OF DRAWINGS

In order to better describe and illustrate the embodiments or examples provided in the present application, reference may be made to one or more of the figures. The additional details or examples used to describe the drawings should not be considered as limiting the scope of the disclosed applications, currently described embodiments or examples, and any one of currently understood preferred embodiments of these applications. Moreover, in all of the figures, identical parts are represented by identical reference numerals. In the figures:
FIG. 1 is a schematic diagram of a battery cell in an embodiment of the present application;
FIG. 2 is an exploded view of the battery cell in an embodiment of the present application as shown in FIG. 1;
FIG. 3 is a schematic diagram of a battery module in an embodiment of the present application;
FIG. 4 is a schematic diagram of a battery pack in an embodiment of the present application;
FIG. 5 is an exploded view of the battery pack in an embodiment of the present application shown in FIG. 4;
FIG. 6 is a schematic diagram of an electrical apparatus in which a secondary battery is used as a power source in an embodiment of the present application; and
FIG. 7 is a surface electron microscope image of a silicon composite material of in-situ grown CNT prepared in an embodiment of the present application.

Reference numerals in the figures:
1 Battery pack; 2 Upper box; 3 Lower box; 4 Battery module; 5 Battery cell; 51 Case; 52 Electrode assembly; 53 Cover plate; 6 Electrical apparatus.

### DETAILED DESCRIPTION

Some embodiments of a silicon composite material, a preparation method therefor, a negative electrode plate, a secondary battery, and an electrical apparatus in the present application are described in detail below with reference to the drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "range" disclosed in the present application is defined in the form of a lower limit and an upper limit, a given range is defined by selection of a lower limit and an upper limit, and the selected lower limit and upper limit define boundaries of the particular range. A range defined in this way may be inclusive or exclusive of end values, any one of which may be independently included or excluded, and may be combined in any way, that is, any lower limit may be combined with any upper limit to form a range. For example, if the ranges of 60-120 and 80-110 are enumerated for a particular parameter, it is understood that the ranges of 60-110 and 80-120 are also contemplatable. Additionally, if the minimum range values 1 and 2 are enumerated, and if the maximum range values 3, 4, and 5 are further enumerated, the following ranges are all contemplatable: 1-3, 1-4, 1-5, 2-3, 2-4, and 2-5. In the present application, unless otherwise stated, the numerical range "a-b" represents an abbreviated representation of any combination of real numbers between a and b, wherein both a and b are real numbers. For example, the numerical range "0-5" means that all the real numbers between "0-5" have been enumerated herein, and "0-5" is just an abbreviated representation of combinations of these numerical values. In addition, when a parameter is expressed as an integer greater than or equal to 2, it is equivalent to enumerating that the parameter is, for example, an integer of 2, 3, 4, 5, 6, 7, 8, 9, 10, 11, 12, or the like. For example, when a parameter is expressed as an integer selected from "2-10", it is equivalent to enumerating an integer of 2, 3, 4, 5, 6, 7, 8, 9, and 10.

The "plurality" involved in the present application, unless otherwise particularly defined, refers to a number greater than 2 or equal to 2. For example, the "one or more" means one or greater than or equal to two.

Unless otherwise particularly stated, all embodiments and optional embodiments of the present application may be combined with each other to form new technical solutions.

Reference herein to "an embodiment" means that a particular feature, structure, or characteristic described in connection with the embodiment can be comprised in at least one example or embodiment of the present application. The appearances of the phrase in various places in the specification neither necessarily refer to a same embodiment, nor are independent or alternative embodiments mutually exclusive from other embodiments. Those skilled in the art understand, both explicitly and implicitly, that the embodiments described herein may be combined with other embodiments. The "embodiment" mentioned herein is understood similarly.

Those skilled in the art can understand that in the method of each embodiment, the presentation sequence of steps does not mean a strict execution sequence and thus does not constitute any limitation to the implementation process. The detailed execution sequence of the steps should be determined by functions and possible internal logic thereof. Unless otherwise particularly stated, all steps in the present application may be performed sequentially or may be performed randomly, and are preferably performed sequentially. For example, the method comprises steps (a) and (b), meaning that the method may comprise steps (a) and (b) performed sequentially, or may comprise steps (b) and (a) performed sequentially. For example, the reference to the method may further comprise step (c), which means that step (c) may be added to the method in any sequence, for example, the method may comprise steps (a), (b) and (c), or may comprise steps (a), (c) and (b), or may comprise steps (c), (a) and (b), and so on.

In the present application, in open-ended technical features or technical solutions described with the wordings such as "contain," "include," or "comprise," unless otherwise stated, additional members other than the enumerated members are not excluded, which may be regarded as providing both close-ended features or solutions consisting of the enumerated members and open-ended features or solutions including additional members in addition to the enumerated members. For example, A comprises a1, a2, and a3, and unless otherwise stated, may further comprise other members or may not comprise additional members, which may be regarded as providing both the feature or solution that "A consists of a1, a2, and a3" and the feature or solution that "A not only comprises a1, a2, and a3, but also comprises other members." In the present application, unless otherwise stated, A (such as B) means that B is a non-limiting example of A, and may be understood as that A is not limited to B.

In the present application, the "optionally" and "optional" mean dispensable, that is, they mean any one selected from two parallel solutions of "presence" or "absence." If a plurality of "optional" appear in a technical solution, unless otherwise particularly stated and in the case of no contradiction or mutually restrictive relationship, each "optional" is independent respectively.

A silicon-based material will have huge volume changes (>300%) during charge-discharge, which is much higher than a carbon-based material. There is point contact between a conventional conductive agent and negative electrode active material particles. After the silicon-based material expands, there are large gaps between the particles, thereby failing to form an effective conductive network, and significantly reducing the fast charging performance and the cycling performance thereof.

A solution is intended to improve this problem by adding a carbon nanotube (CNT) to the material. However, due to fewer defects and lack of an active radical on a surface of the carbon nanotube, the carbon nanotube has very low solubility in various solvents. In addition, the carbon nanotube is composed of graphite with a lamellar structure, the sp2 hybridization of carbon atoms forms highly delocalized electrons, there is a large van der Waals attraction among the carbon nanotube, and the carbon nanotube has a relatively large specific surface area and a relatively large long diameter. Therefore, the carbon nanotube generally exists in a state of entangled aggregates, and the addition of the carbon nanotube at the slurry level will bring a series of problems, such as slurry gelation, agglomeration, and poor dispersion effects. Moreover, since the carbon nanotube and the carbon-based material such as graphite are hybridized, after the slurry is coated to make an electrode plate, at the electrode plate level, the carbon nanotube more easily adheres to and agglomerates on the surface of the carbon-based material, and there are relatively few carbon nanotube on the surface of the silicon-based material on the contrary, so that it is difficult to improve the conductive network of the silicon-based material and achieve long-range conductivity of the silicon-based material.

Another solution provides a composite material, to jointly clad physically mixed carbon nanotube and silicon-based material using a carbon material, which disperses the carbon nanotube inside the carbon cladding layer to reduce agglomeration thereof, but the carbon nanotube is dispersed inside the carbon cladding layer in this case, can only function to connect the silicon-based material inside the negative electrode active material particles, and has little effect on the construction of the conductive network among a plurality of negative electrode active material particles. In particular, during the charge-discharge, after the negative electrode active material particles expand, it is difficult to achieve good electrical contact between the plurality of negative electrode active material particles to form an effective conductive network. Therefore, this solution has little effect on improving the cycling performance and the fast charging performance of the secondary battery.

On this basis, some examples of the present application provide a silicon composite material, comprising a one-dimensional conductive material, an inner core, and a cladding layer, wherein the cladding layer clads on an outer surface of the inner core, the one-dimensional conductive material is arranged on an outer surface of the cladding layer, and the inner core comprises a silicon-based material.

In the above silicon composite material, the one-dimensional conductive material is arranged on the outer surface of the cladding layer of the silicon-based material, which can, on the one hand, reduce mutual entanglement and agglomeration between the one-dimensional conductive material, thereby reducing the problems of slurry gelation, agglomeration, and poor dispersion effect during preparation of the negative electrode plate; and on the other hand, the one-dimensional conductive material arranged on the outer surface of the cladding layer can improve the electrical contact between the plurality of negative electrode active material particles. Even if the negative electrode active material particles at the electrode plate level expand during the charge-discharge, an effective conductive network can still be constructed among the particles, thereby comprehensively improving the cycling performance and the fast charging performance.

It is understandable that the cladding layer preferably continuously and completely clads on the outer surface of the inner core comprising the silicon-based material, and the solution of discontinuous or partial cladding on the outer surface of the inner core is not excluded.

It is understandable that material composition of the one-dimensional conductive material may be identical to, or may be different from or partially identical to, that of the cladding layer, and preferably, the material composition of the one-dimensional conductive material is identical to that of the cladding layer.

It is understandable that "the one-dimensional conductive material is arranged on the outer surface of the cladding layer" may mean that the one-dimensional conductive material is directly arranged on the outer surface of the cladding layer without an intermediate connection unit, or may mean that the one-dimensional conductive material is arranged on the outer surface of the cladding layer through an intermediate connection unit. In some examples of the present application, the intermediate connection unit may be catalyst particles.

In some of the examples, the one-dimensional conductive material extends outward from the outer surface of the cladding layer. The one-dimensional conductive material is formed on the surface of the cladding layer, and can fully extend and disperse outward, which is conducive to the construction of the conductive network among the particles, and improving the cycling performance and the fast charging performance.

It is understandable that the cladding layer may comprise a monolayer cladding layer or a multi-layer cladding layer.

In some of the examples, the outer surface of the cladding layer further has the catalyst particles, and the one-dimensional conductive material is arranged on surfaces of the catalyst particles. Non-restrictively, the presence of catalyst eigenelements can be characterized by, e.g., ICP.

Further, the catalyst particles comprise transition metal nanoparticles.

In some of the examples, the transition metal nanoparticles comprise one or more of iron nanoparticles, cobalt nanoparticles, and nickel nanoparticles. Selection of appropriate transition metal nanoparticles is conducive to improving the structural stability, thereby improving the cycle life. It is understandable that the iron nanoparticles, the cobalt nanoparticles, and the nickel nanoparticles are all elementary metal particles. Further, the transition metal nanoparticles comprise one or more of cobalt nanoparticles and nickel nanoparticles.

In some of the examples, the cladding layer comprises a carbon cladding layer. Cladding of the inner core using the carbon cladding layer is conductive to further improving the conductivity among the particles. Non-restrictively, the carbon cladding layer comprises amorphous carbon.

In some of the examples, mass percentage of the catalyst particles is 0.001%-0.3% based on mass of the silicon-based material. The mass percentage of the catalyst particles can be reasonably controlled to regulate the content and distribution of the one-dimensional conductive material, and fully stretch and disperse the catalyst particles, which is conductive to improving the cycling performance and the fast charging performance. Specifically, the mass percentage of the catalyst particles includes, but is not limited to: 0.001%, 0.005%, 0.01%, 0.015%, 0.02%, 0.05%, 0.1%, 0.15%, 0.2%, 0.25%, 0.3%, or a range between any two thereof. Further, the mass percentage of the catalyst particles is 0.05%-0.3%.

It is understandable that the one-dimensional conductive material refers to a one-dimensional material with conductivity. The one-dimensional material refers to a linear material, for example, crystal whisker, in which atoms are regularly arranged in one direction at the micrometer to centimeter magnitude, only a few atoms are arranged in other two directions at the nanometer magnitude, and accordingly, electrons substantially move linearly only in a nanometer-scale direction. The one-dimensional material comprises, e.g., a nanobelt, a nanotube, and a quantum wire material. Non-restrictively, the one-dimensional conductive material may be, for example, a carbon nanotube, a metal nanofiber, and a one-dimensional conductive polymer nanomaterial.

In some of the examples, the one-dimensional conductive material comprises a carbon nanotube.

Further, average tube length of the carbon nanotube is 0.5 micrometers (µm)-10 µm. Reasonable control of the tube length of carbon nanotube, on the one hand, is conductive to the construction of the conductive network among the negative electrode active material particles, and on the other hand, reduces the possibility of mutual entanglement and agglomeration among the carbon nanotube, thereby improving the fast charging performance and the cycling performance. Specifically, the average tube length of the carbon nanotube includes, but is not limited to: 0.5 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, or a range between any two thereof. Still further, the average tube length of the carbon nanotube is 1 µm-10 µm.

Further, the average tube diameter of the carbon nanotube is 1 nanometer (nm)-50 nm. Reasonable control of the tube diameter of the carbon nanotube is conducive to improving the cycling performance. Specifically, the average tube diameter of the carbon nanotube includes, but is not limited to: 1 nm, 5 nm, 10 nm, 15 nm, 20 nm, 25 nm, 30 nm, 35 nm, 40 nm, 45 nm, 50 nm, or a range between any two thereof. Still further, the average tube diameter of the carbon nanotube is 20 nm-30 nm.

In some of the examples, mass percentage of the one-dimensional conductive material is 0.01%-5% based on the mass of the silicon-based material. Reasonable control of the mass percentage of the one-dimensional conductive material, on the one hand, is conducive to the construction of the conductive network among the negative electrode active material particles, and on the other hand, reduces the possibility of mutual entanglement and agglomeration between the one-dimensional conductive material. Specifically, the mass percentage of the one-dimensional conductive material includes, but is not limited to: 0.01%, 0.05%, 0.1%, 0.15%, 0.2%, 0.5%, 1%, 1.5%, 2%, 2.5%, 3%, 3.5%, 4%, 4.5%, 5%, or a range between any two thereof. Further, the mass percentage of the one-dimensional conductive material is 0.4%-5%.

In some of the examples, Dv50 of the silicon composite material is 1 µm-30 µm. The silicon composite material has better dimension size and favorable size uniformity. The Dv50 of the silicon composite material within the above range, on the one hand, is conductive to improving ionic conductivity, reducing internal resistance during discharge, and improving the material life; and on the other hand, enables the material to have an appropriate specific surface area, reduces particle agglomeration during processing, and improves the storage performance. Specifically, the Dv50 of the silicon composite material includes, but is not limited to: 1 µm, 5 µm, 8 µm, 10 µm, 15 µm, 20 µm, 25 µm, 30 µm, or a range between any two thereof.

In addition, non-restrictively, the silicon-based material comprises one or more of a silicon-oxygen compound (SiOx, 0<x<2), a silicon-carbon composite, elementary silicon, or a silicon alloy.

It is understandable that the structure of the silicon-oxygen compound (SiOx, 0<x<2) and the silicon carbon composite is a cladding structure, a loading structure, or a dispersion structure.

In some examples of the present application, the silicon-based material comprises the silicon-oxygen compound with a loading structure, and the silicon-oxygen compound is specifically a composite material formed by loading silicon nanoparticles on a silicon dioxide substrate.

In some examples of the present application, the silicon-based material comprises a silicon-oxygen compound with a cladding structure, and the silicon-oxygen compound is specifically an outer layer of silicon monoxide cladded with a carbon-based material layer as a protective layer.

In some examples of the present application, the silicon-based material comprises a silicon-carbon composite with a cladding structure, and the silicon carbon composite is specifically an outer layer of elementary silicon and/or a silicon alloy cladded with a carbon-based material layer as a protective layer.

In some examples of the present application, the silicon-based material comprises a silicon-carbon composite with a dispersion structure, and the silicon-carbon composite is specifically a composite system formed by physical contact and uniformity between an inner core of elementary silicon and/or a silicon alloy and a carbon-based inner core.

In some other examples of the present application, a method for preparing a silicon composite material is provided, comprising steps below:
preparing a cladding layer on an outer surface of an inner core, wherein the inner core comprises a silicon-based material; and
preparing a one-dimensional conductive material on an outer surface of the cladding layer.

The above preparation method has simple steps, and is convenient for industrial promotion and application. Further, this preparation method prepares the one-dimensional conductive material on the outer surface of the cladding layer, thereby reducing the problems of slurry gelation and agglomeration caused by adding the one-dimensional conductive material to the slurry, and contributing to the process of the negative electrode plate.

It is understandable that the silicon composite material in the preparation method has identical or similar technical solutions and effects to the aforementioned silicon composite material, and will not be repeated here.

In some of the examples, the preparing the one-dimensional conductive material on the outer surface of the cladding layer comprises steps below:
preparing catalyst particles on the outer surface of the cladding layer; and
preparing the one-dimensional conductive material on surfaces of the catalyst particles.

In some of the examples, the preparing the catalyst particles on the outer surface of the cladding layer comprises steps below:
preparing a transition metal oxide and/or a transition metal hydroxide on the surface of the cladding layer; and
generating transition metal nanoparticles from the transition metal oxide and/or the transition metal hydroxide through calcination under a reducing atmosphere.

In some of the examples, the calcination is at a temperature of 600 Celsius (°C)-800°C.

In some of the examples, the preparing the transition metal oxide and/or the transition metal hydroxide on the surface of the sub-cladding layer comprises: mixing the inner core surface-cladded with the sub-cladding layer with a solution of a transition metal salt to generate the transition metal oxide and/or the transition metal hydroxide on the surface of the sub-cladding layer.

In some of the examples, the one-dimensional conductive material in-situ grows on the surfaces of the catalyst particles. Through in-situ growth, the one-dimensional conductive material has better distribution uniformity and can even be directionally arranged.

In some of the examples, the one-dimensional conductive material comprises a carbon nanotube, and the preparing the one-dimensional conductive material on the surfaces of the catalyst particles comprises a step below:
introducing a carbon source gas for in-situ growth of the carbon nanotube on the surfaces of the catalyst particles.

Non-restrictively, the carbon source gas comprises a hydrocarbon gas. Further, the carbon source gas comprises one or more of CH₄, C₂H₂, and propylene.

Non-restrictively, the temperature condition for preparing the one-dimensional conductive material on the surfaces of the catalyst particles is 500°C-800°C.

Non-restrictively, the carbon source gas is introduced at a flow rate of 0.5 liters/minute (L/min)-1.5 L/min, and the reaction duration is 0.5 hours (h)-5 h.

Some other examples of the present application provide a negative electrode plate, comprising a negative electrode current collector and a negative electrode active material layer arranged on at least one surface of the negative electrode current collector, wherein the negative electrode active material layer comprises one or more of the silicon composite material as described above or the silicon composite material prepared using the preparation method as described above.

In some of the examples, the negative electrode active material layer further comprises a carbon-based material.

Non-restrictively, mass ratio of the silicon composite material to the carbon-based material is (10%-90%):(90%-10%). Specifically, the mass ratio includes, but is not limited to: 10%:90%, 20%:80%, 30%:70%, 40%:60%, 50%:50%, 60%:40%, 70%:30%, 80%:20%, 90%:10%, or a range between any two thereof. Further, the mass ratio of the silicon composite material to the carbon-based material is (10%-50%):(90%-50%).

Some other examples of the present application provide a secondary battery, comprising the negative electrode plate as described above.

Some other examples of the present application provide an electrical apparatus, comprising one or more of the negative electrode plate as described above or the secondary battery as described above.

In addition, the secondary battery and the electrical apparatus in the present application are described below with reference to the drawings as appropriate.

In general, the secondary battery comprises a positive electrode plate, a negative electrode plate, an electrolyte, and a separator. During the charging and discharging process of the battery, active ions are intercalated and deintercalated back and forth between the positive electrode plate and the negative electrode plate. The electrolyte plays a role in conducting ions between the positive electrode plate and negative electrode plate. The separator is arranged between the positive electrode plate and the negative electrode plate and mainly serves to prevent a short circuit between the positive and negative electrodes while allowing ions to pass through.

### Positive electrode plate

It is understandable that the battery will be accompanied by deintercalation and consumption of lithium (Li) during the charge-discharge, and the content of Li in the positive electrode plate is different when the battery is discharged to different states. In the enumeration of the positive electrode material in the present application, unless otherwise stated, the content of Li is the initial state of the material. The positive electrode material is applied to the positive electrode plate in the battery system, and after charge-discharge cycles, the content of Li in the positive electrode material contained in the electrode plate generally will change. The content of Li may be measured using, but not limited to, the molar content. Regarding "the content of Li is the initial state of the material", the initial state of the material refers to the state before the material is added to the positive electrode slurry. It is understandable that a new material obtained by appropriate modification on the basis of the enumerated positive electrode material is also within the scope of the positive electrode material. The aforementioned appropriate modification refers to an acceptable modification mode for the positive electrode material, and a non-limiting example thereof is, e.g., coating modification.

In the enumeration of the positive electrode material in the present application, the content of oxygen (O) is only a theoretical state value. The release of oxygen from the crystal lattice will change the molar content of oxygen, and the actual content of O will fluctuate. The content of O may be measured using, but not limited to, the molar content.

The positive electrode plate comprises a positive electrode current collector and a positive electrode active material layer arranged on at least one surface of the positive electrode current collector.

As a non-limiting example, the positive electrode current collector has two surfaces opposite in its own thickness direction, and the positive electrode active material layer is arranged on any one or both of the two opposite surfaces of the positive electrode current collector.

In some of the embodiments, a metal foil or a composite current collector may be used as the positive electrode current collector. For example, an aluminum foil may be used as the metal foil. The composite current collector may comprise a high molecular material substrate layer and a metal layer formed on at least one surface of the high molecular material substrate layer. The composite current collector may be obtained by forming a metal material on the high molecular material substrate. In the positive electrode current collector, non-limiting examples of the metal material may include one or more of aluminum, an aluminum alloy, nickel, a nickel alloy, titanium, a titanium alloy, silver, and a silver alloy, etc. In the positive electrode current collector, non-limiting examples of the high molecular material substrate may include one or more of substrates, such as polypropylene (PP), polyethylene terephthalate (PET), polybutylene terephthalate (PBT), polystyrene (PS), or polyethylene (PE).

In some of the embodiments, a positive electrode active material for a battery well known in the art may be used as the positive electrode active material. As a non-limiting example, the positive electrode active material may include one or more of the following materials: a lithium-containing phosphate of olivine structure, a lithium-transition metal oxide, and a respective modified compound thereof. However, the present application is not limited to these materials, and other conventional materials that may be used as positive electrode active materials for batteries may also be used. Only one of these positive electrode active materials may be used alone, or more than two thereof may be used in combination. Examples of the lithium-transition metal oxide may include, but are not limited to, one or more of a lithium-cobalt oxide (e.g., LiCoO₂), a lithium-nickel oxide, a lithium-manganese oxide, a lithium-nickel-cobalt oxide, a lithium-manganese-cobalt oxide, a lithium-nickel-manganese oxide, a lithium-nickel-cobalt-manganese oxide, a lithium-nickel-cobalt-aluminum oxide, a modified compound thereof, and the like. Non-limiting examples of the lithium-containing phosphate of olivine structure may include, but are not limited to, one or more of a lithium iron phosphate, a lithium iron phosphate-carbon composite material, a lithium manganese phosphate, a lithium manganese phosphate-carbon composite material, a lithium iron manganese phosphate, and a lithium iron manganese phosphate-carbon composite material. Non-limiting examples of the lithium-cobalt oxide may include LiCoO₂; non-limiting examples of the lithium-nickel oxide may include LiNiO₂; non-limiting examples of the lithium-manganese oxide may include, e.g., LiMnO₂ or LiMn₂O₄; and non-limiting examples of the lithium-nickel-cobalt-manganese oxide may include, e.g., LiNi_{1/3}Co_{1/3}Mn_{1/3}O₂ (or abbreviated as NCM₃₃₃), LiNi_{0.5}Co_{0.2}Mn_{0.3}O₂ (or abbreviated as NCM₅₂₃), LiNi_{0.5}Co_{0.25}Mn_{0.25}O₂ (or abbreviated as NCM₂₁₁), LiNi_{0.6}Co_{0.2}Mn_{0.2}O₂ (or abbreviated as NCM₆₂₂), or LiNi_{0.8}Co_{0.1}Mn_{0.1}O₂ (or abbreviated as NCM₈₁₁). Non-limiting examples of the lithium-nickel-cobalt-aluminum oxide may include LiNi_{0.80}Co_{0.15}Al_{0.05}O₂.

In some embodiments thereof, the positive electrode active material layer further optionally comprises a binder. As a non-limiting example, the binder may comprise one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some of the embodiments, the positive electrode active material layer further optionally comprises a conductive agent. As a non-limiting example, the conductive agent may comprise one or more of superconducting carbon, acetylene black, carbon black, Ketjen black, carbon dot, carbon nanotube, graphene, and carbon nanofiber.

In some of the embodiments, the positive electrode plate may be prepared by: dispersing the above ingredients, such as the positive electrode active material, the conductive agent, the binder, and any other ingredient, for preparing the positive electrode plate in a solvent to form a positive electrode slurry; and coating the positive electrode slurry on at least one side surface of the positive electrode current collector, followed by processes, such as drying and cold pressing, to provide the positive electrode plate. The type of the solvent may be selected from, but is not limited to, any one in the above embodiments, such as N-methyl pyrrolidone (NMP). The positive electrode slurry may be coated on a single surface of the positive electrode current collector or on both surfaces of the positive electrode current collector. The positive electrode slurry may be coated on a single surface of the positive electrode current collector or on both surfaces of the positive electrode current collector. Solid content of the positive electrode slurry may be 40wt%-80wt%. Viscosity of the positive electrode slurry at room temperature may be adjusted to 5,000 millipascal/second (mPa·s)-25,000 mPa·s. When the positive electrode slurry is coated, unit surface density of the coating may be 15 milligram/square centimeter (mg/m²)-35 mg/m² based on dry weight (excluding the solvent). Compacted density of the positive electrode plate may be 3.0 gram/cubic centimeter (g/cm³)-3.6 g/m³, optionally 3.3-3.5 g/m³.

### Negative electrode plate

The negative electrode plate is as described above.

In addition, as a non-limiting example, the negative electrode current collector has two surfaces opposite in its own thickness direction, and the negative electrode active material layer is arranged on any one or both of the two opposite surfaces of the negative electrode current collector.

In some of the embodiments, a metal foil or a composite current collector may be used as the negative electrode current collector. For example, a copper foil may be used as the metal foil. The composite current collector may comprise a high molecular material substrate layer and a metal layer formed on at least one surface of a high molecular material substrate. The composite current collector may be obtained by forming a metal material on the high molecular material substrate. In the negative electrode current collector, non-limiting examples of the metal material may include one or more of copper, a copper alloy, nickel, a nickel alloy, titanium, a titanium alloy, silver, and a silver alloy, etc. In the negative electrode current collector, non-limiting examples of the high molecular material substrate may include one or more of substrates, such as polypropylene (PP), polyethylene terephthalate (PET), polybutylene terephthalate (PBT), polystyrene (PS), or polyethylene (PE).

In some of the embodiments, the negative electrode active material layer may further include other negative electrode active materials for batteries well known in the art. As a non-limiting example, the negative electrode active material may include one or more of the following materials: artificial graphite, natural graphite, soft carbon, hard carbon, a silicon-based material, a tin-based material, lithium titanate, and the like. The silicon-based material may include one or more of elementary silicon, a silicon-oxygen compound, a silicon-carbon composite, a silicon-nitrogen composite, and a silicon alloy. The tin-based material may include one or more of elementary tin, a tin-oxygen compound, and a tin alloy. However, the present application is not limited to these materials, and other conventional materials that may be used as negative electrode active materials for batteries may also be used. Only one of these negative electrode active materials may be used alone, or more than two thereof may be used in a combination.

In some of the embodiments, the negative electrode active material layer further optionally comprises a binder. The binder may comprise one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some of the embodiments, the negative electrode active material layer further optionally comprises a conductive agent. The conductive agent may comprise one or more of superconducting carbon, acetylene black, carbon black, Ketjen black, carbon dot, carbon nanotube, graphene, and carbon nanofiber.

In some of the embodiments, the negative electrode active material layer further optionally comprises other adjuvants, for example, a thickener (such as sodium carboxymethyl cellulose (CMC-Na)).

In some of the embodiments, the negative electrode plate may be prepared by: dispersing the above ingredients, such as the negative electrode active material, the conductive agent, the binder, and any other ingredient, for preparing the negative electrode plate in a solvent (a non-limiting example of the solvent is, e.g., deionized water) to form a negative electrode slurry; and coating the negative electrode slurry on at least one side surface of the negative electrode current collector, followed by processes, such as drying and cold pressing, to provide the negative electrode plate. The negative electrode slurry may be coated on a single surface of the negative electrode current collector or on both surfaces of the negative electrode current collector. Solid content of the negative electrode slurry may be 40wt%-60wt%. Viscosity of the negative electrode slurry at room temperature may be adjusted to 2,000-10,000 mPa·s. When the negative electrode slurry is coated, unit surface density of the coating may be 75-220 g/m² based on dry weight (excluding the solvent). Compacted density of the negative electrode plate may be 1.0 g/m³-1.8 g/m³.

### Electrolyte

The electrolyte functions to conduct ions between the positive electrode plate and the negative electrode plate. Types of the electrolyte are not particularly limited in the present application, and may be selected as required. For example, the electrolyte may be in a liquid state, a gel state, or an all-solid state.

In some of the embodiments, an electrolyte solution is used as the electrolyte. The electrolyte solution comprises an electrolyte salt and a solvent.

In some of the embodiments, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorophosphate (LiPO₂F₂), lithium difluoro(oxalato)borate (LiDFOB), lithium bis(oxalato)borate (LiBOB), lithium difluoro bis(oxalato)phosphate (LiDFOP), and lithium tetrafluoro(oxalato)phosphate (LiTFOP).

In some of the embodiments, the solvent may include one or more of ethylene carbonate (EC, 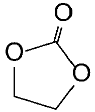 ), propylene carbonate (PC, 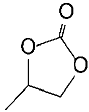 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), ethylene carbonate 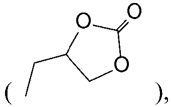 fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some of the embodiments, the electrolyte solution further optionally comprises an additive. For example, the additive may include a negative electrode film-forming additive or a positive electrode film-forming additive, or may further include an additive that can improve some performances of the battery, such as an additive that improves overcharge performance of the battery or an additive that improves high-temperature or low-temperature performance of the battery.

In some embodiments, the additive in the electrolyte solution may include, but is not limited to, one or more of fluoroethylene carbonate (FEC), difluoroethylene carbonate (DFEC), trifluoromethylethylene carbonate (TFPC), or the like.

### Separator

In some of the embodiments, the secondary battery further comprises a separator. The type of the separator is not particularly limited in the present application, and any well-known porous-structured separator having good chemical stability and mechanical stability may be selected.

In some of the embodiments, the material of the separator may include one or more of glass fiber, non-woven cloth, polyethylene, polypropylene, and polyvinylidene fluoride. The separator may be a monolayer film, or may be a multi-layer composite film, which is not particularly limited. When the separator is a multi-layer composite film, the material in each layer may be identical or different, which is not particularly limited.

In some embodiments, thickness of the separator is 6-40 µm, optionally 12-20 µm.

In some of the embodiments, the positive electrode plate, the negative electrode plate, and the separator may be made into an electrode assembly by a winding process or a stacking process.

In some of the embodiments, the secondary battery may comprise an outer package. The outer package may be used to encapsulate the electrode assembly and the electrolyte described above.

In some of the embodiments, the outer package of the secondary battery may be a hard shell, such as a hard plastic shell, an aluminum shell, or a steel shell. The outer package of the secondary battery may also be a pouch, such as a bag-type pouch. The material of the pouch may be plastic, and further, non-limiting examples of the plastic may include one or more of polypropylene, polybutylene terephthalate, polybutylene succinate, and the like.

The secondary battery comprises at least one battery cell. The secondary battery may comprise 1 or more battery cells.

In the present application, unless otherwise stated, the "battery cell" refers to a basic unit that can achieve mutual conversion between chemical energy and electrical energy, and further, generally at least comprises a positive electrode plate, a negative electrode plate, and an electrolyte. During the charging and discharging process of the battery, active ions are intercalated and deintercalated back and forth between the positive electrode plate and the negative electrode plate. The electrolyte functions to conduct the active ions between the positive electrode plate and the negative electrode plate.

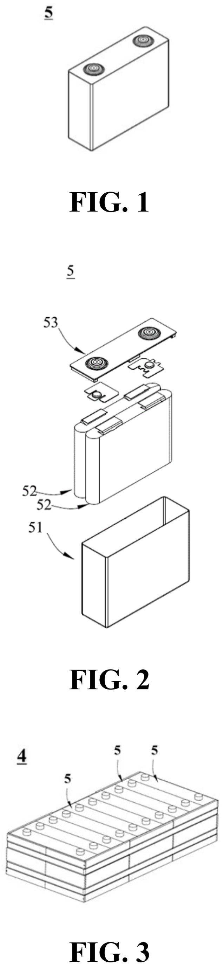

The shape of the battery cell is not particularly limited in the present application, and may be a cylinder shape, a square shape, or any other shape. For example, FIG. 1 shows a battery cell 5 with a square structure as an example.

In some of the embodiments, referring to FIG. 2, the outer package may comprise a case 51 and a cover plate 53. The case 51 may comprise a bottom plate and a side plate connected to the bottom plate, wherein the bottom plate and the side plate enclose to form an accommodating cavity. The case 51 has an opening in communication with the accommodating cavity, and the cover plate 53 can cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the battery cell 5 may be one or more, and may be selected by those skilled in the art based on actual requirements.

The secondary battery may be a battery module 4 or a battery pack 1.

The battery module comprises at least one battery cell. The number of battery cells comprised in the battery module may be one or more, and those skilled in the art may select an appropriate number according to the application and capacity of the battery module.

FIG. 3 shows a battery module 4 as an example. Referring to FIG. 3, in the battery module 4, a plurality of battery cells 5 may be arranged sequentially along a length direction of the battery module 4, or, of course, may be arranged in any other manner. Further, the plurality of battery cells 5 may be fixed by fasteners.

Optionally, the battery module 4 may further comprise a shell having an accommodating space, in which the plurality of battery cells 5 are accommodated.

In some of the embodiments, the above battery modules may be further assembled into a battery pack, the number of battery modules comprised in the battery pack may be one or more, and an appropriate number may be selected by those skilled in the art based on the application and capacity of the battery pack.

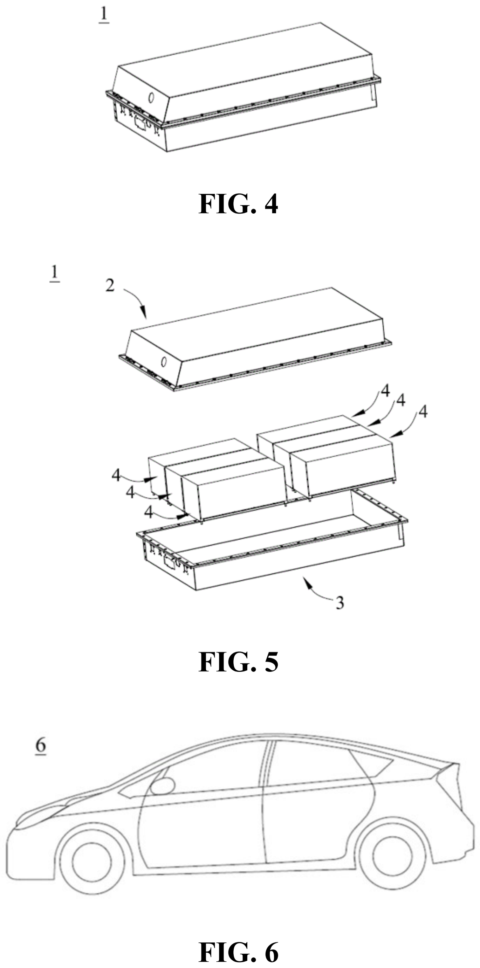

FIGS. 4 and 5 show a battery pack 1 as an example. Referring to FIGS. 4 and 5, the battery pack 1 may comprise a battery box and a plurality of battery modules 4 arranged in the battery box. The battery box comprises an upper box 2 and a lower box 3, where the upper box 2 can cover the lower box 3 and forms an enclosed space for accommodating the battery module 4. The plurality of battery modules 4 may be arranged in the battery box in any manner.

In addition, the present application further provides an electrical apparatus, comprising the secondary battery provided in the present application. The secondary battery may be used as a power source of the electrical apparatus, or may be used as an energy storage unit of the electrical apparatus. The electrical apparatus may include, but is not limited to, a mobile device, an electric vehicle, an electric train, a ship, a satellite, an energy storage system, and the like. The mobile device may be, for example, a mobile phone or a laptop; and the electric vehicle may be, for example, but is not limited to, an all-electric vehicle, a hybrid electric vehicle, a plug-in hybrid electric vehicle, an electric bicycle, an electric scooter, an electric golf cart, an electric truck, and the like.

For the electrical apparatus, the secondary battery may be selected based on use requirements thereof.

FIG. 6 shows an electrical apparatus 6 as an example. The electrical apparatus is, e.g., an all-electric vehicle, a hybrid electric vehicle, or a plug-in hybrid electric vehicle. To satisfy the need of the electrical apparatus for a high power and high energy density of secondary batteries, a battery pack or a battery module can be used.

The device used as another example can be, for example, a mobile phone, a tablet computer, a laptop, etc. The apparatus is generally required to be light and thin, and may use a secondary battery as a power source.

Embodiments of the present application are described below. The embodiments described below are illustrative, are merely used to explain the present application, and should not be construed as limiting the present application. The embodiments in which techniques or conditions are not specified are implemented based on the techniques or conditions described in literatures of the art or based on the product manuals. Where no manufacturers are specified, the employed reagents or instruments are all commercially available conventional products.

### Example 1

### 1) Preparation of a positive electrode plate

A positive electrode active material NCM811, a conductive carbon black SP, and a binder PVDF at to a weight ratio of 98:1:1 were dispersed in a solvent NMP, and the mixture was fully mixed to obtain a positive electrode slurry; which was uniformly coated on double side surfaces of a positive electrode current collector aluminum foil, dried, and cold pressed, to provide the positive electrode plate, wherein the coated weight per unit area on both sides was 0.27 g/1540.25 mm².

### 2) Preparation of a negative electrode plate

### 2.1 Preparation of a negative electrode active material

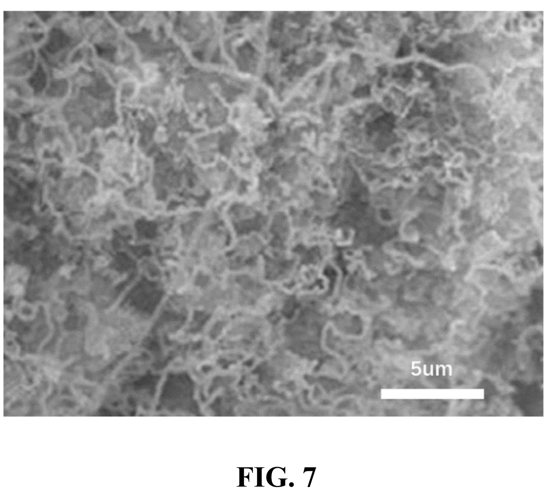

An amorphous carbon-coated pure silicon material (commercially available product with the mass percentage of pure silicon being 95%) was used as the raw material, and ultrasonically dispersed in an ethanol-water solution (volume ratio 1:1) of FeCl₃, to generate iron oxide on the surface of the amorphous carbon-coated pure silicon material. Then, the product was calcinated at a high temperature of 700°C under a reducing atmosphere (argon:hydrogen=95:5, volume ratio) to generate iron nanoparticles (the mass percentage of the iron nanoparticles was 0.15% based on the mass of the pure silicon). With the iron nanoparticles as the catalyst, a carbon source gas C₂H₂ was introduced at a flow rate of 1 L/min. The mixture was kept at a constant temperature of 700°C for reaction for 3 h, and then cooled naturally to obtain a silicon composite material with in-situ grown CNTs with the particle size Dv50 of 8 µm, wherein the average tube length of the CNTs was 5 µm, the average tube diameter was 25 nm, and the mass percentage of the CNTs was 2% based on the mass of the pure silicon. Moreover, as can be seen from a surface electron microscope image of the silicon composite material with the in-situ grown CNTs as shown in FIG. 7, the CNTs extended outward from the outer surface of the amorphous carbon cladding layer, rather than being closely attached to the surface of the carbon cladding layer or fused with the carbon cladding layer.

2.2. The negative electrode active material (silicon material (silicon composite material) with the in-situ grown CNTs prepared in the step 2.1 and graphite (carbon-based material) mixed at a mass ratio of 20%:80%), a thickener sodium carboxymethyl cellulose, a binder styrene butadiene rubber, and a conductive agent acetylene black at a mass ratio of 97:1:1:1 were mixed, to which deionized water was added, to obtain a negative electrode slurry under the action of a vacuum mixer. The negative electrode slurry was uniformly coated on both side surfaces of a copper foil; which was dried at room temperature then transferred to a drying oven at 120°C for drying for 1 h, then supercold pressed and cut, to provide the negative electrode plate, wherein the coated weight per unit area on both sides was 0.17 g/1540.25 mm².

### 3) Separator

A polypropylene separator of 12 µm thick was selected.

### 4) Preparation of an electrolyte solution

The organic solvent is a mixed solution comprising ethylene carbonate (EC), ethyl methyl carbonate (EMC), and diethyl carbonate (DEC), wherein the volume ratio of EC, EMC, and DEC is 20:20:60. In an argon atmosphere glove box with the moisture content less than 10 ppm, a fully dried lithium salt LiPF6 was dissolved in the organic solvent, and the mixture was fully mixed to provide the electrolyte solution. The concentration of the lithium salt was 1 mol/L.

### 5) Preparation of a battery

The positive electrode plate, the separator, and the negative electrode plate were sequentially stacked, so that the separator was located between the positive and negative electrode plates to serve for separation, and then winded into a square bare cell, which was installed in an aluminum-plastic film, and then baked at 80°C to remove water, to which 10 g of a corresponding non-aqueous electrolyte solution was injected, and which was sealed, followed by processes such as standing, hot and cold pressing, formation, clamping, and capacity grading, to provide the finished product battery with a capacity of 4,000 mAh.

The preparation methods of the secondary battery in Examples 2-23 are similar to that of the secondary battery in Example 1, mainly except for the different material types and proportions, as detailed in Table 1 below. The average tube length and the average tube diameter of the carbon nanotubes can be controlled by adjusting the parameters, such as the temperature, carbon source gas flow rate, and duration.

The preparation methods of the secondary battery in Examples 24-27 are similar to that of the secondary battery in Example 1, mainly except that the mass ratio of the silicon composite material to the carbon-based material is 10%:90%, 90%:10%, 50%:50%, and 65%:35% respectively.

The preparation method of the secondary battery in Comparative Example 1 is similar to that of the secondary battery in Example 1, mainly except that the preparation of the silicon composite material with the in-situ grown CNTs in the step 2.1 was not performed, the amorphous carbon-cladded pure silicon material and graphite at a ratio of 20%:80% were directly mixed as the negative electrode active material in the step 2.2, and the CNTs accounting for 2% mass percentage of the pure silicon were additionally added to the negative electrode slurry.

**Table 1**

| | Catalyst | | Carbon nanotube | | | Silicon composite material | Negative electrode plate |
|---|---|---|---|---|---|---|---|
| | Mass percentage | Type | Average tube length | Average tube diameter | Mass percentage | Dv50 | Mass ratio of silicon composite material to carbon-based material |
| Example 1 | **0.15%** | Iron | 5 µm | 25 nm | **2%** | 8 µm | 20%:80% |
| Example 2 | **0.001%** | Iron | 5 µm | 25 nm | **0.01%** | 8 µm | 20%:80% |
| Example 3 | **0.01%** | Iron | 5 µm | 25 nm | **0.1%** | 8 µm | 20%:80% |
| Example 4 | **0.05%** | Iron | 5 µm | 25 nm | **0.4%** | 8 µm | 20%:80% |
| Example 5 | **0.1%** | Iron | 5 µm | 25 nm | **1.2%** | 8 µm | 20%:80% |
| Example 6 | **0.2%** | Iron | 5 µm | 25 nm | **2.5%** | 8 µm | 20%:80% |
| Example 7 | **0.3%** | Iron | 5 µm | 25 nm | **5%** | 8 µm | 20%:80% |
| Example 8 | 0.15% | **Cobalt** | 5 µm | 25 nm | 2% | 30 µm | 20%:80% |
| Example 9 | 0.15% | **Nickel** | 5 µm | 25 nm | 2% | 30 µm | 20%:80% |
| Example 10 | 0.15% | Iron | **0.5 µm** | 25 nm | 2% | 8 µm | 20%:80% |
| Example 11 | 0.15% | Iron | **1.5 µm** | 25 nm | 2% | 8 µm | 20%:80% |
| Example 12 | 0.15% | Iron | **3 µm** | 25 nm | 2% | 8 µm | 20%:80% |
| Example 13 | 0.15% | Iron | **4 µm** | 25 nm | 2% | 8 µm | 20%:80% |
| Example 14 | 0.15% | Iron | **4.5 µm** | 25 nm | 2% | 8 µm | 20%:80% |
| Example 15 | 0.15% | Iron | **5.5 µm** | 25 nm | 2% | 8 µm | 20%:80% |
| Example 16 | 0.15% | Iron | **6 µm** | 25 nm | 2% | 8 µm | 20%:80% |
| Example 17 | 0.15% | Iron | **8 µm** | 25 nm | 2% | 8 µm | 20%:80% |
| Example 18 | 0.15% | Iron | **10 µm** | 25 nm | 2% | 8 µm | 20%:80% |
| Example 19 | 0.15% | Iron | 5 µm | **1 nm** | 2% | 1 µm | 20%:80% |
| Example 20 | 0.15% | Iron | 5 µm | **10 nm** | 2% | 1 µm | 20%:80% |
| Example 21 | 0.15% | Iron | 5 µm | **20 nm** | 2% | 1 µm | 20%:80% |
| Example 22 | 0.15% | Iron | 5 µm | **30 nm** | 2% | 1 µm | 20%:80% |
| Example 23 | 0.15% | Iron | 5 µm | **50 nm** | 2% | 1 µm | 20%:80% |

### Test example:

### Test method:

### (1) Fast charging performance:

At 25°C, the battery with a pre-embedded copper wire was charged to 4.2V at a constant current of 0.33C, and further charged at a constant voltage until the current was 0.05C; in this case, the battery was in a fully charged state, and the charge capacity in this case was recorded, i.e., the 1st cycle charge capacity; and the battery was left to stand for 30 min, and then discharged to 2.8V at a constant current of 0.33C, which was a cyclic charge-discharge process. The discharge capacity in this case was recorded, i.e., the 1st cycle discharge capacity. Then, lithium plating was started by connecting a charging device to the copper wire and the positive electrode for charging at a constant current of 20 uA for a duration of 2 h, then connecting the charging device to the copper wire and the negative electrode for charging at a constant current of 20 uA for a duration of 2 h. The lithium-plated copper wire is the reference electrode with the potential defaulted to 0 mV. After lithium plating, the battery was charged at a constant current of 2C, and the potential difference between the anode and the reference electrode was recorded. When the potential difference reached 0 mV, the ratio of the charged capacity to the 1st cycle charge capacity was recorded. This ratio represents the fast charging performance of the battery cell.

### (2) Cycling performance:

At 25°C, the battery was charged to 4.2V at a constant current of 0.5C, and further charged at a constant voltage until the current was 0.05C; in this case, the battery was in a fully charged state, and the charge capacity in this case was recorded, i.e., the 1st cycle charge capacity; and the battery was left to stand for 30 min, and then discharged to 2.8V at a constant current of 1C, which was a cyclic charge-discharge process. The discharge capacity in this case was recorded, i.e., the 1st cycle discharge capacity. The battery was subjected to a cyclic charge-discharge test in accordance with the above method, the discharge capacity after each cycle was recorded until the discharge capacity of the battery attenuated to 80% of the 1st cycle discharge capacity, and the number of cycles in this case was used to represent the cycle life of the battery.

(3) Slurry dispersity: The resulting slurry was left to stand for 24 h, picked up with a stirring rod to observe flow characteristics of the slurry, and determined as "good" in the case of no obvious aggregation or gelation.

The test result is as shown in Table 2 below:

**Table 2**

| | Fast charging performance | Cycle life (cycles) | Slurry dispersity |
|---|---|---|---|
| Example 1 | 78% | 850 | Good |
| Example 2 | 72% | 808 | Good |
| Example 3 | 73% | 815 | Good |
| Example 4 | 75% | 824 | Good |
| Example 5 | 76% | 841 | Good |
| Example 6 | 78% | 853 | Good |
| Example 7 | 78% | 851 | Good |
| Example 8 | 78% | 866 | Good |
| Example 9 | 78% | 879 | Good |
| Example 10 | 74% | 802 | Good |
| Example 11 | 75% | 832 | Good |
| Example 12 | 76.50% | 840 | Good |
| Example 13 | 77% | 842 | Good |
| Example 14 | 77.50% | 846 | Good |
| Example 15 | 78% | 851 | Good |
| Example 16 | 78.50% | 853 | Good |
| Example 17 | 79.50% | 854 | Good |
| Example 18 | 81% | 856 | Good |
| Example 19 | 78.5% | 798 | Good |
| Example 20 | 78.1% | 805 | Good |
| Example 21 | 78.4% | 812 | Good |
| Example 22 | 78.5% | 809 | Good |
| Example 23 | 78.3% | 807 | Good |
| Comparative Example 1 | 72% | 702 | Gel |

As can be seen from the comparison between Examples 1-23 and Comparative Example 1, the present application can effectively improve the fast charging performance and the cycling performance of the silicon composite material by arranging the one-dimensional conductive material on the outer surface of the cladding layer. In addition, in terms of the process, due to good dispersity of the material, the process of the negative electrode plate can be easily implemented.

As can be seen from the comparison between Examples 1-7, reasonable control of the mass percentage of carbon nanotube is conducive to further improving the cycling performance and the fast charging performance.

As can be seen from the comparison between Example 1 and Examples 8-9, the selection of an appropriate transition metal nanoparticle is conducive to improving the structural stability, thereby improving the cycle life.

As can be seen from the comparison between Example 1 and Examples 10-18, reasonable control of the tube length of the carbon nanotube is conductive to further improving the cycling performance and the fast charging performance.

As can be seen from the comparison between Example 1 and Examples 19-23, reasonable control of the tube diameter of carbon nanotube is conducive to improving the cycling performance.

The above description of the examples tends to emphasize the differences among the examples, and reference may be made to each other for similarities thereof, which will not be repeated herein for the sake of brevity.

It should be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A silicon composite material, comprising a one-dimensional conductive material, an inner core, and a cladding layer, wherein the cladding layer clads on an outer surface of the inner core, the one-dimensional conductive material is arranged on an outer surface of the cladding layer, and the inner core comprises a silicon-based material.

2. The silicon composite material according to claim 1, wherein the one-dimensional conductive material extends outward from the outer surface of the cladding layer.

3. The silicon composite material according to claim 1 or 2, wherein the outer surface of the cladding layer further has catalyst particles, the one-dimensional conductive material is arranged on surfaces of the catalyst particles; and the catalyst particles comprise transition metal nanoparticles.

4. The silicon composite material according to claim 3, wherein the transition metal nanoparticles comprise one or more of iron nanoparticles, cobalt nanoparticles, and nickel nanoparticles.

5. The silicon composite material according to any one of claims 1 to 4, wherein the cladding layer comprises a carbon cladding layer, and the carbon cladding layer comprises amorphous carbon.

6. The silicon composite material according to any one of claims 3 to 5, wherein mass percentage of the catalyst particles is 0.001%-0.3% based on mass of the silicon-based material.

7. The silicon composite material according to any one of claims 1 to 6, wherein the one-dimensional conductive material comprises a carbon nanotube.

8. The silicon composite material according to claim 7, wherein the carbon nanotube has one or more of features below:
(1) average tube length is 0.5 µm-10 µm; and
(2) average tube diameter is 1 nm-50 nm.

9. The silicon composite material according to claim 8, wherein the carbon nanotube has one or more of features below:
(1) the average tube length is 1 µm-10 µm; and
(2) the average tube diameter is 20 nm-30 nm.

10. The silicon composite material according to any one of claims 1 to 9, wherein mass percentage of the one-dimensional conductive material is 0.01%-5% based on the mass of the silicon-based material.

11. The silicon composite material according to claim 10, wherein the mass percentage of the one-dimensional conductive material is 0.4%-5% based on the mass of the silicon-based material.

12. The silicon composite material according to any one of claims 1-11, wherein Dv50 of the silicon composite material is 1 µm-30 µm.

13. The silicon composite material according to any one of claims 1 to 12, wherein the silicon-based material comprises one or more of a silicon-oxygen compound, a silicon-carbon composite, elementary silicon, or a silicon alloy.

14. A method for preparing a silicon composite material, comprising steps below:
preparing a cladding layer on an outer surface of an inner core, wherein the inner core comprises a silicon-based material; and
preparing a one-dimensional conductive material on an outer surface of the cladding layer.

15. The method for preparing a silicon composite material according to claim 14, wherein the preparing the one-dimensional conductive material on the outer surface of the cladding layer comprises steps below:
preparing catalyst particles on the outer surface of the cladding layer; and
preparing the one-dimensional conductive material on surfaces of the catalyst particles.

16. The method for preparing a silicon composite material according to claim 15, wherein the preparing the catalyst particles on the outer surface of the cladding layer comprises steps below:
preparing a transition metal oxide and/or a transition metal hydroxide on the surface of the cladding layer; and
generating transition metal nanoparticles from the transition metal oxide and/or the transition metal hydroxide through calcination under a reducing atmosphere.

17. The method for preparing a silicon composite material according to claim 16, wherein the calcination is at a temperature of 600°C-800°C.

18. The method for preparing a silicon composite material according to any one of claims 15 to 17, wherein the one-dimensional conductive material in-situ grows on the surfaces of the catalyst particles.

19. The method for preparing a silicon composite material according to any one of claims 15 to 18, wherein the one-dimensional conductive material comprises a carbon nanotube, and the preparing the one-dimensional conductive material on the surfaces of the catalyst particles comprises a step below:
introducing a carbon source gas for in-situ growth of the carbon nanotube on the surfaces of the catalyst particles.

20. A negative electrode plate, comprising a negative electrode current collector and a negative electrode active material layer arranged on at least one surface of the negative electrode current collector, wherein the negative electrode active material layer comprises one or more of the silicon composite material according to any one of claims 1 to 13 or the silicon composite material prepared using the preparation method according to any one of claims 14 to 19.

21. The negative electrode plate according to claim 20, wherein the negative electrode active material layer further comprises a carbon-based material, and mass ratio of the silicon composite material to the carbon-based material is (10%-90%):(90%-10%).

22. A secondary battery, comprising the negative electrode plate according to claim 20 or 21.

23. An electrical apparatus, comprising one or more of the negative electrode plate according to claim 20 or 21 or the secondary battery according to claim 22.
